# EUROPEAN PATENT SPECIFICATION

(11) **EP 4 524 646 B1**
(45) Date of publication and mention of the grant of the patent: **01.07.2026**
(21) Application number: 23803538.0
(22) Date of filing: 08.05.2023
(51) Int. Cl.: G02F 1/13, G02F 1/1333, G02F 1/1334, G02F 1/1335

(54) **LIGHT CONTROL SHEET AND METHOD FOR MANUFACTURING LIGHT CONTROL SHEET**
LICHTSTEUERUNGSFOLIE UND VERFAHREN ZUR HERSTELLUNG EINER LICHTSTEUERUNGSFOLIE
FEUILLE DE COMMANDE DE LUMIÈRE ET PROCÉDÉ DE FABRICATION DE FEUILLE DE COMMANDE DE LUMIÈRE

(30) Priority: 11.05.2022 JP 2022077932
(43) Date of publication of application: 19.03.2025
(73) Proprietor: Toppan Holdings Inc., Tokyo 110-0016 (JP)
(72) Inventor: TAKAHASHI Yusuke, Tokyo 110-0016 (JP); YAMASHITA Daisuke, Tokyo 110-0016 (JP)
(74) Representative: TBK
(86) International application number: PCT/JP2023/017296
(87) International publication number: WO 2023/219061

(56) References cited:
- WO-A1-2020/054445
- WO-A1-2020/175217
- WO-A1-2021/200828
- CN-A- 107 286 958
- CN-A- 110 471 205
- CN-A- 111 176 033
- JP-A- 2019 194 719
- JP-A- 2019 211 719
- JP-A- 2020 189 894
- JP-A- 2021 009 188
- JP-A- 2021 053 888
- JP-A- 2021 060 521
- JP-A- 2021 084 912
- JP-A- 2022 059 241

## Description

### [Technical Field]

The present disclosure relates to a light control sheet having a transparent state and an opaque state, and a method of producing the light control sheet.

### [Background Art]

A light control sheet includes a transparent resin layer that defines voids, and a liquid crystal composition filling the voids. By changing the voltage applied to the transparent resin layer, the alignment of the liquid crystal compound changes, and in turn the difference in refractive index between the transparent resin layer and the liquid crystal composition changes. The light control sheet transitions from the opaque state to the transparent state when the difference in refractive index between the transparent resin layer and the liquid crystal composition decreases. The light control sheet transitions from the transparent state to the opaque state when the difference in refractive index between the transparent resin layer and the liquid crystal composition increases (see, for example, PTL 1). The light control sheet includes spacers in the transparent resin layer. The spacers prevent the transparent resin layer from becoming thin.

A first example of the spacers contains polymethylmethacrylate resin. Polymethylmethacrylate resin suppresses the elution of free radicals containing an aromatic ring, which improves the durability of the liquid crystal composition (see, for example, PTL 2).

A second example of the spacers has two or more peaks in its size distribution. The haze value in the opaque state and the linear transmittance in the transparent state are in a trade-off relationship in that an increase in one results in a decrease in the other. For example, when the haze value in the opaque state increases as a result of an increase in the amount of spacers, the linear transmittance in the transparent state decreases. A light control sheet having two or more peaks in the size distribution increases the flexibility in design of the light control sheet so as to weaken the trade-off relationship (see, for example, PTL 3).

### [Citation List]

### [Patent Literature]

[PTL 1] JP 2018-45135 A
[PTL 2] JP 7047885 B
[PTL 3] JP 2021-009188 A
CN 111176033 A discloses a light control sheet with a polymer dispersed liquid crystal sandwiched between two substrates. Each substrate comprises a light-transmitting substrate, a transparent electrode layer on the inner surface of the light-transmitting substrate and a hard coat layer on the outer surface of the light-transmitting substrate, wherein each substrate as a whole has a haze of 2% or more.

### [Summary of the Invention]

### [Problem to be Solved by the Invention]

Meanwhile, the difference in structure between the transparent resin layer and the spacers, and the difference in refractive index between the transparent resin layer and the spacers promotes scattering of light. The scattering occurring at the interface between the transparent resin layer and each spacer is different from the scattering occurring at the interface between the transparent resin layer and the liquid crystal composition. The scattering occurring at the interface between the transparent resin layer and each spacer makes the presence of the spacers conspicuous, whether in a transparent or opaque state. In particular, when the spacers are concentrated in a part of the transparent resin layer, the scattering occurring at the interface between the transparent resin layer and each spacer makes the cluster of spacers conspicuous when the light control sheet is observed. A configuration in which the presence of the spacers is conspicuous, whether it is the first or second example described above, results in non-uniform visibility through the light control sheet in the plane of the light control sheet.

### [Solution to Problem]

A light control sheet for solving the above problem includes: two transparent substrate layers each including an electrode layer; and a light control layer located between the two transparent substrate layers, in which the light control layer includes a transparent resin layer defining a void, a liquid crystal composition filling the void, and a spacer that determines a thickness of the light control layer. **In** the light control sheet, each transparent substrate layer has external haze of less than 0.1%, and each transparent substrate layer has internal haze of 0.1% or more and 2.0% or less.

A light control sheet for solving the above problem includes: two transparent substrate layers each including an electrode layer; and a light control layer located between the two transparent substrate layers, in which the light control layer includes a transparent resin layer defining a void, a liquid crystal composition filling the void, and a spacer that determines a thickness of the light control layer. In the light control sheet, each transparent substrate layer has external haze of less than 0.1%, and the two transparent substrate layers have total internal haze of 0.2% or more and 4.0% or less.

A method of producing a light control sheet for solving the above problem includes: coating a coating liquid for forming a light control layer between two transparent substrate layers each including an electrode layer, the light control layer including a transparent resin layer defining a void, a spacer embedded in the transparent resin layer, and a liquid crystal composition filling the void; and forming the light control layer by curing the coating liquid. In the method of producing a light control sheet, each transparent substrate layer in the light control sheet has external haze of less than 0.1%, and each transparent substrate layer has internal haze of 0.1% or more and 2.0% or less.

A method of producing a light control sheet for solving the above problem includes: coating a coating liquid for forming a light control layer between two transparent substrate layers each including an electrode layer, the light control layer including a transparent resin layer defining a void, a spacer embedded in the transparent resin layer, and a liquid crystal composition filling the void; and forming the light control layer by curing the coating liquid. In the method of producing a light control sheet, each transparent substrate layer in the light control sheet has external haze of less than 0.1%, and the two transparent substrate layers have total internal haze of 0.2% or more and 4.0% or less.

The external haze of the transparent substrate layers originates from surface roughness of each transparent substrate layer. According to each of the above configurations, the external haze of the transparent substrate layers is less than 0.1%. Therefore, if the electrode layers are on the surfaces of the transparent substrate layers, the electric field acting between the two transparent substrate layers can suppress the unevenness due to the roughness. If the alignment layers are on the surfaces of the transparent substrate layers, it is possible to prevent the orientation regulation force acting between the two transparent substrate layers from becoming uneven.

The internal haze of the transparent substrate layers originates from the difference in refractive index dispersed inside each transparent substrate layer. According to each of the above configurations, the internal haze of the transparent substrate layers is 0.1% or more. Alternatively, the two transparent substrate layers have total internal haze of 0.2% or more. Therefore, scattering occurring at the interface between the transparent resin layer and the spacer is overshadowed by the internal scattering of the transparent substrate layer. In addition, since the internal haze of each transparent substrate layer is 2.0% or less, or the total internal haze of two transparent substrate layers is 4.0% or less, the transparency of the light control sheet is not excessively impaired. This suppresses such non-uniform visibility that makes the spacers conspicuous, whether in the transparent or opaque state.

Note that dispersion of the spacers in the light control layer causes the spacers to be distributed unevenly to some extent. The internal scattering of the transparent substrate layer as described above suitably suppresses non-uniform visibility resulting from uneven distribution of spacers. In a case where the light control sheet is attached to a transparent member, the adhesive layer that bonds the light control sheet to the transparent member reduces the external haze of the transparent substrate layer almost entirely in the plane of the light control sheet. Alternatively, the adhesive layer that bonds the light control sheet to the transparent member generates in-plane variation in the external haze of the transparent substrate layer in the light control sheet. Similarly, when an ultraviolet blocking film, a shatterproof film, or the like is attached to the light control sheet, the external haze of the transparent substrate layer is reduced or varied by the adhesive layer that bonds the functional film to the light control sheet.

On the other hand, the internal haze of the transparent substrate layer is not reduced or less varied by the various adhesive layers. Therefore, if the internal haze of the transparent substrate layer is 0.1% or more and 2.0% or less, the above-described non-uniform visibility can be suppressed, whether the light control sheet is attached to a transparent member, a functional film is attached to the light control sheet, or the light control sheet is used alone. If the internal haze of the transparent substrate layer is 0.2% or more and 4.0% or less, the above-described non-uniform visibility can be suppressed, whether the light control sheet is attached to a transparent member, a functional film is attached to the light control sheet, or the light control sheet is used alone.

In the above light control sheet, each transparent substrate layer may include a support layer that supports the electrode layer, the external haze of each transparent substrate layer may be external haze of the electrode layer supported by the transparent substrate layer, and internal haze of each support layer may be 0.1% or more and 2.0% or less.

In the above method of producing a light control sheet, forming the transparent layers may include laminating an electrode layer on a support layer so that external haze of each transparent substrate layer is external haze of the electrode layer supported by the transparent substrate layer, and internal haze of the support layer may be 0.1% or more and 2.0% or less.

As described above, the external haze of the transparent substrate layers originates from surface roughness of each transparent substrate layer. According to each of the above configurations, the external haze of the electrode layer supported by the support layer is the external haze of the transparent substrate layer. This prevents the electric field acting between the two transparent substrate layers from becoming uneven due to the external haze of the electrode layers.

In the above light control sheet, each support layer may contain particles therein.

According to this configuration, the internal haze of the transparent substrate layers is realized by the particles in the support layers. This also makes it easy to adjust the internal haze of the transparent substrate layers to be within a desired range.

In the above light control sheet, average particle diameter of the particles may be 0.8 µm or more and 5.0 µm or less. According to this configuration, such non-uniform visibility that makes the spacers conspicuous can be suppressed more effectively.

In the above light control sheet, each support layer may include a foundation layer that is a foundation for the electrode layer and a substrate that supports the foundation layer, and each foundation layer may contain particles therein.

The above method of producing a light control sheet may further include forming the support layer by laminating, on a substrate, a foundation layer for laminating the electrode layer, the foundation layer may contain particles therein.

According to each of the above configurations, the internal haze of the transparent substrate layers is realized by the particles in the support layers. This also makes it easy to adjust the internal haze of the transparent substrate layers to be within a desired range.

In the above light control sheet, a difference in refractive index between the particles and a foundation resin layer surrounding the particles may be 0.01 or more and 0.05 or less. According to this configuration, it is also possible to easily control the internal haze of the support layer to 0.1% or more and 2.0% or less.

In the above light control sheet, each transparent substrate layer may have a contact surface that contacts the light control layer, and the contact surface may have an arithmetic mean roughness Sa of 20 nm or less.

According to this configuration, since the arithmetic mean roughness Sa of the contact surface in contact with the light control layer is 20 nm or less, the unevenness in the electric field caused by variation in the thickness or shape of the light control layer can be suppressed.

In the above light control sheet, the light control sheet may have a haze of 6% or more and 10% or less in a transparent state. According to this configuration, the transparency of the light control sheet can be easily ensured while suppressing such non-uniform visibility that makes the spacers conspicuous with the internal haze of the transparent substrate layer.

### [Advantageous Effects of the Invention]

The light control sheet and the method of producing the light control sheet of the present disclosure can provide uniform in-plane visibility through the light control sheet.

### [Brief Description of the Drawings]

Fig. 1 is a configuration diagram illustrating a layer configuration of a light control sheet along with a driver.
Fig. 2 is a table showing visibility evaluation results for light control sheets of Examples.

### [Description of the Embodiments]

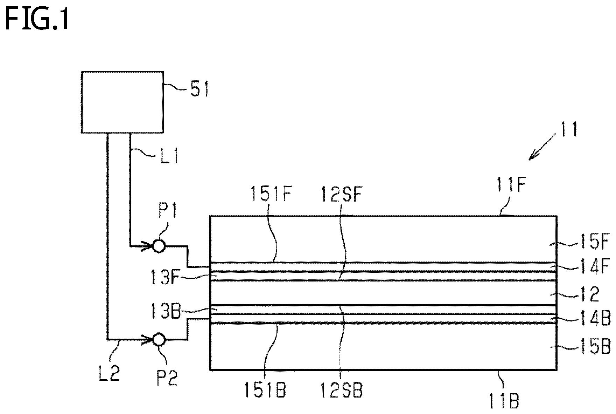

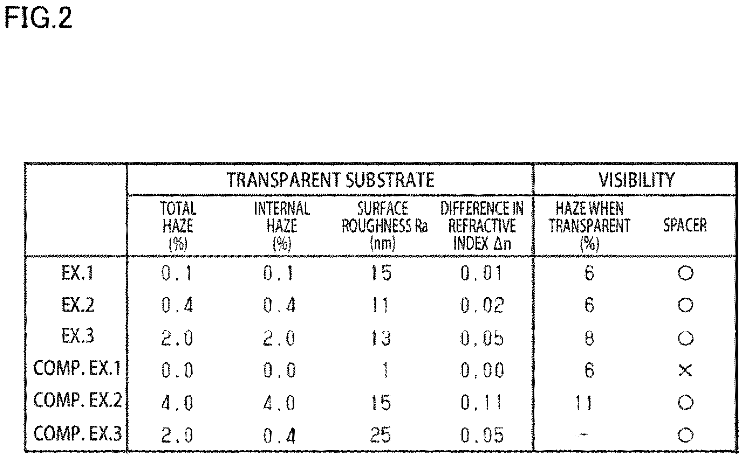

An embodiment of a light control sheet and a method of producing a light control sheet will be described. First, a configuration of a light control device will be described with reference to Fig. 1. After that, the internal haze of a support layer will be described with reference to Fig. 2.

The light control sheet is attached to a transparent substrate. The transparent substrate may be a glass body or a resin body. The transparent substrate may be an interior part of a building or a mobile object, or an exterior part of a building or a mobile object. The transparent substrate may be window glass of a moving body such as a vehicle or aircraft, window glass of a building, or a partition placed in a vehicle or indoors. The light control sheet may be attached to a flat surface or a curved surface such as a cylindrical or spherical surface.

The light control sheet may be attached to one side of one transparent substrate. The light control sheet may be attached separately to both the front and back surfaces of a single transparent substrate. The light control sheet may be laminated onto another light control sheet via an adhesive layer. The light control sheet may be attached to the front surface of one transparent substrate and to the back surface of another transparent substrate so that it is sandwiched between the two transparent substrates.

The light control sheet may be either of the normal drive type or reverse drive type. A normal-type light control sheet is in the opaque state when it is not driven. The normal-type light control sheet transitions from the opaque state to the transparent state when a voltage signal, which is a drive signal, is supplied. The normal-type light control sheet returns to the opaque state from the transparent state when the supply of the voltage signal is terminated. A reverse-type light control sheet is in the transparent state when it is not driven. The reverse-type light control sheet transitions to the opaque state from the transparent state when a voltage signal is supplied. The reverse-type light control sheet returns to the transparent state from the opaque state when the supply of the voltage signal is terminated.

The haze is lower in the transparent state than in the opaque state. The linear transmittance is higher in the transparent state than in the opaque state. A diffuse transmittance is lower in the transparent state than in the opaque state. The haze of the light control sheet in the transparent state may be 6% or more and 10% or less. The haze of the light control sheet in the opaque state may be 80% or more. The light control sheet may include a transparent polymer layer that defines voids, and a liquid crystal composition filling the voids. The light control sheet may transition from the transparent state to the opaque state by increasing the difference in refractive index between the transparent polymer layer and the liquid crystal composition. The light control sheet may transition from the opaque state to the transparent state by reducing the difference in refractive index between the transparent polymer layer and the liquid crystal composition.

The light control sheet includes two transparent substrate layers. The two transparent substrate layers sandwich a light control layer so that each transparent substrate layer comes into contact with the light control layer. The total haze of one transparent substrate layer is obtained by a method in accordance with JIS K-7136. The total haze of one transparent substrate layer is the sum of an external haze of one transparent substrate layer and an internal haze of one transparent substrate layer. The external haze of the transparent substrate layers originates from surface roughness of each transparent substrate layer. If the surface roughness of the transparent substrate layer is flattened by a material having a refractive index similar to that of the surface, the external haze of the transparent substrate layer is small enough not to contribute to the total haze of the transparent substrate layer. In the case where the external haze of the transparent substrate layer does not contribute to the total haze, the total haze of the transparent substrate layer corresponds to the internal haze of the transparent substrate layer.

The normal-type and reverse-type light control sheets each include the two transparent substrate layers, two transparent electrode layers (hereinafter also simply referred to as electrode layers), and the light control layer. In the following embodiment, the configuration and actions of the reversed light control sheet will be mainly described, followed by a supplementary description of the configuration differences of the normal-type light control sheet from the reverse type. Description of the configuration similarities between the normal-type light control sheet and the reverse type will be omitted. In the examples to be described later, the configuration and evaluation results of normal-type light control sheets will be mainly described.

### [Configuration of Light Control Sheet 11]

As shown in Fig. 1, the light control device includes a light control sheet 11 and a driver 51. The light control sheet 11 includes a light control layer 12, a first alignment layer 13F, a second alignment layer 13B, a first electrode layer 14F, a second electrode layer 14B, a first support layer 15F, and a second support layer 15B. The first alignment layer 13F, first electrode layer 14F, and first support layer 15F form a first transparent substrate layer. The second alignment layer 13B, second electrode layer 14B, and second support layer 15B form a second transparent substrate layer. The light control sheet 12 is located between the first and second transparent substrate layers.

The light control layer 12 is located between the first and second alignment layers 13F and 13B. A first light control surface 12SF of the light control layer 12 is in contact with the first alignment layer 13F. A second light control surface 12SB of the light control layer 12 is in contact with the second alignment layer 13B. The first alignment layer 13F is located between the light control layer 12 and the first electrode layer 14F, and is in contact with the light control layer 12 and the first electrode layer 14F. The second alignment layer 13B is located between the light control layer 12 and the second electrode layer 14B, and is in contact with the light control layer 12 and the second electrode layer 14B.

The first electrode layer 14F is connected to the driver 51 through a first connection terminal P1 and a first wiring L1. The first electrode layer 14F is located between the first alignment layer 13F and the first support layer 15F, and is in contact with the first alignment layer 13F and the first support layer 15F. The second electrode layer 14B is connected to the driver 51 through a second connection terminal P2 and a second wiring L2. The second electrode layer 14B is located between the second alignment layer 13B and the second support layer 15B, and is in contact with the second alignment layer 13B and the second support layer 15B.

The light control layer 12 includes a transparent resin layer and a liquid crystal composition. The transparent resin layer defines voids therein. The voids in the transparent resin layer are filled with the liquid crystal composition. The type in which the liquid crystal composition is held by the transparent resin layer is a polymer dispersion type. The type in which the liquid crystal composition is held by the transparent resin layer may be any one selected from the group consisting of a polymer network type and a capsule type. The light control layer 12 has a thickness of 1 µm or more and 100 µm or less.

As described above, the light control layer 12 of the polymer dispersion type includes a transparent resin layer that defines a large number of isolated voids. The light control layer 12 of the polymer dispersion type holds the liquid crystal composition in the voids dispersed in the transparent resin layer. The light control layer 12 of the polymer network type has voids in the form of a three-dimensional mesh in the transparent resin layer. The light control layer 12 of the polymer network type holds the liquid crystal composition in interconnected voids in the form of a mesh. The light control layer 12 of the capsule type holds the liquid crystal composition in capsule-like voids dispersed in the transparent resin layer.

The first and second alignment layers 13F and 13B each regulate the alignment of a liquid crystal compound. The first and second alignment layers 13F and 13B are visually recognized as colorless and transparent or colored and transparent. If the liquid crystal compound realizes the transparent state in vertical alignment, the first and second alignment layers 13F and 13B are vertical alignment films. The vertical alignment film aligns the long axis direction of the liquid crystal compound with the thickness direction of the light control layer 12 so as to allow visible light to pass through the light control layer 12. If the liquid crystal compound realizes the transparent state in horizontal alignment, the first and second alignment layers 13F and 13B are horizontal alignment films. In addition, the light control sheet 11 may be provided with a polarizing layer in order to make the long axis direction of the liquid crystal compound parallel to the direction in which the transmission axis of the polarizing layer is extending. The reverse-type light control sheet may include two alignment layers, or two alignment layers and a polarizing layer. Note that the normal-type light control sheet may or may not include two alignment layers and a polarizing layer.

The materials of the first and second alignment layers 13F and 13B are each independently an organic polymer compound or an inorganic oxide. The organic polymer compound may be any one selected from the group consisting of polyimide, polyamide, polyvinyl alcohol, and cyanide compounds. The inorganic oxide may be any one of silicon oxide, zirconium oxide, and silicone. The thickness of the alignment layers 13F and 13B may be 20 nm or more and 500 nm or less.

The first and second electrode layers 14F and 14B are visually recognized as colorless and transparent or colored and transparent, independently. The materials of the first and second electrode layers 14F and 14B are each a conductive inorganic oxide, metal, or conductive organic polymer compound. The conductive inorganic oxide may be any one selected from the group consisting of indium tin oxide, fluorine-doped tin oxide, tin oxide, and zinc oxide. The metal is a gold or silver nanowire. The conductive organic polymer compound may be any one selected from the group consisting of carbon nanotubes and poly(3,4-ethylenedioxythiophene). The thickness of the electrode layers 14F and 14B may be 5 nm or more and 100 nm or less.

The first and second support layers 15F and 15B are visually recognized as colorless and transparent or colored and transparent, independently. The materials of the first and second support layers 15F and 15B are each an organic polymer compound or an inorganic polymer compound. The organic polymer compound may be any one selected from the group consisting of polyester, polyacrylate, polycarbonate, and polyolefin. The inorganic polymer compound may be any one selected from the group consisting of silicon oxide, silicon oxynitride, and silicon nitride.

The first transparent substrate layer has a first contact surface that is in contact with the first light control surface 12SF of the light control layer 12. The first contact surface is one surface of the first alignment layer 13F. Note that, if the first transparent substrate layer does not include the first alignment layer 13F as in an example of the normaltype, the first contact surface of the first transparent substrate layer may be one surface of the first electrode layer 14F.

The second transparent substrate layer has a second contact surface that is in contact with the second light control surface 12SB of the light control layer 12. The second contact surface is one surface of the second alignment layer 13B. Note that, if the second transparent substrate layer does not include the second alignment layer 13B as in an example of the normal type, the second contact surface of the second transparent substrate layer may be one surface of the second electrode layer 14B.

If an electric field in the light control layer 12 is required to have an improved in-plane uniformity, an arithmetic mean roughness Sa of the first contact surface is preferably 1 nm or more and 20 nm or less, more preferably 10 nm or more and 20 nm or less, and even more preferably 10 nm or more and 15 nm or less. The arithmetic mean roughness Sa of the second contact surface is preferably 1 nm or more and 20 nm or less, more preferably 10 nm or more and 20 nm or less, and even more preferably 10 nm or more and 15 nm or less. If the first electrode layer 14F has a small thickness such as 5 nm or more and 100 nm or less, a first support surface 151F of the first substrate layer 15F that is in contact with the first electrode layer 14F preferably has an arithmetic mean roughness Sa of 1 nm or more and 20 nm or less, more preferably 10 nm or more and 20 nm or less, and even more preferably 10 nm or more and 15 nm or less. If the second electrode layer 14B has a small thickness such as 5 nm or more and 100 nm or less, a second support surface 151B of the second substrate layer 15B that is in contact with the second electrode layer 14B preferably has an arithmetic mean roughness Sa of 1 nm or more and 20 nm or less, more preferably 10 nm or more and 20 nm or less, and even more preferably 10 nm or more and 15 nm or less.

The driver 51 is connected to the first and second electrode layers 14F and 14B separately. The driver 51 is connected to the first and second electrode layers 14F and 14B to supply a voltage signal. The voltage signal is applied between the first and second electrode layers 14F and 14B to change the alignment state of the liquid crystal compound.

The driver 51 supplies the voltage signal to align the liquid crystal compound with the electric field, thereby causing the light control sheet 11 to transition from the transparent state to the opaque state. The driver 51 stops supplying the voltage signal to cause the alignment state of the liquid crystal compound to follow the orientation regulation force of the alignment layers 13F and 13B, thereby causing the light control sheet 11 to transition from the opaque state to the transparent state.

Note that the driver 51 of the normal type supplies the voltage signal to align the liquid crystal compound with the electric field, thereby causing the light control sheet 11 to transition from the opaque state to the transparent state. The driver 51 of the normal type stops supplying the voltage signal to change the alignment state of the liquid crystal compound to a random state, thereby causing the light control sheet 11 to transition from the transparent state to the opaque state. Since there is no need to resist the orientation regulation force when transitioning from the opaque state to the transparent state, the voltage applied by the driver 51 of the normal type between the first and second electrode layers 14F and 14B may be lower than that of the reverse type. Since there is no need to resist the orientation regulation force when transitioning from the opaque state to the transparent state, the thickness of the light control layer 12 in the light control sheet 11 of the normal type may be smaller than that of the reverse type.

### [Configuration of Light Control Layer 12]

The light control layer 12 includes a transparent resin layer, a liquid crystal composition, and spacers. The transparent resin layer defines a large number of voids therein. The voids defined by the transparent resin layer are filled with the liquid crystal composition. The voids may be separate isolated voids. Some of the voids may be connected to another. The voids have two or more different sizes. The shape of the voids may be spherical, ellipsoidal, or irregular.

The size of the voids in a cross section of the light control layer 12 is the diameter of a circle circumscribing the void in the cross section. The size of the voids in the light control layer 12 is the average size of all the voids contained in the cross section of the light control layer 12. If it is required to reduce the haze of the light control sheet 11 in the transparent state, the size of the voids may be increased. On the other hand, if it is required to increase the haze of the light control sheet 11 in the opaque state, the size of the voids may be reduced. The size of the voids in the light control layer 12 may be sufficiently smaller than the size of the spacers, may be equal to or smaller than the average particle diameter of the spacers, or may be equal to or smaller than half or one-quarter of the average particle diameter of the spacers.

The transparent resin layer is a cured product of a photopolymerizable compound. The photopolymerizable compound may be an ultraviolet-curable compound or an electron beam-curable compound. The photopolymerizable compound is compatible with the liquid crystal composition. If it is required to improve void size controllability, the photopolymerizable compound is preferably an ultraviolet-curable compound. The ultraviolet-curable compound may contain polymerizable unsaturated bonds at terminals of the molecular structure. Alternatively, the ultraviolet-curable compound may contain polymerizable unsaturated bonds at parts other than the terminals of the molecular structure. The photopolymerizable compound is a single polymerizable compound or a combination of two or more polymerizable compounds.

The ultraviolet-curable compound may be at least one selected from the group consisting of acrylate compounds, methacrylate compounds, styrene compounds, thiol-ene compounds, and oligomers of these compounds.

Acrylate compounds include monoacrylate compounds, diacrylate compounds, triacrylate compounds, and tetraacrylate compounds. The acrylate compound may be butyl ethyl acrylate, ethyl hexyl acrylate, or cyclohexyl acrylate. The methacrylate compound may be a dimethacrylate compound, trimethacrylate compound, or tetramethacrylate compound. The methacrylate compound may be N,N-dimethylaminoethyl methacrylate, phenoxyethyl methacrylate, methoxyethyl methacrylate, or tetrahydrofurfuryl methacrylate. The thiol compound may be 1,3-propanedithiol or 1,6-hexanedithiol. The styrene compound may be styrene or methylstyrene.

The lower limit value of the content of the transparent resin layer relative to the total amount of the transparent resin layer and the liquid crystal composition may be 20% by mass, and a more preferable lower limit value of the content may be 30% by mass. The upper limit value of the content of the transparent resin layer relative to the total amount of the transparent resin layer and the liquid crystal composition may be 70% by mass, and a more preferable upper limit value of the content may be 60% by mass.

The lower and upper limit values of the content of the transparent resin layer define the range in which liquid crystal particles made of the liquid crystal composition undergo phase separation from the cured photopolymerizable compound during the curing process of the photopolymerizable compound. If an improvement in the mechanical strength of the transparent resin layer is required, it is preferable that the lower limit value of the content of the transparent resin layer is high. If it is required to reduce the voltage required to drive the liquid crystal compound, it is preferable that the upper limit value of the content of the transparent resin layer is low.

The liquid crystal composition contains the liquid crystal compound. The liquid crystal compound has a positive dielectric anisotropy, that is, the dielectric constant thereof in its long axis direction is larger than that in its short axis direction. Alternatively, the liquid crystal compound has a negative dielectric anisotropy, that is, the dielectric constant thereof in its long axis direction is smaller than that in its short axis direction. The liquid crystal compound may be at least one selected from the group consisting of those based on Schiff bases, azo types, azoxy types, biphenyls, terphenyls, benzoic acid esters, tolan types, pyrimidines, pyridazines, cyclohexanecarboxylic acid esters, phenylcyclohexanes, biphenylcyclohexanes, dicyanobenzenes, naphthalenes, and dioxanes.

The liquid crystal compound is a single liquid crystal compound or a combination of two or more liquid crystal compounds. The liquid crystal composition may contain a dichroic dye, an antifoaming agent, an antioxidant, a weather resistance agent, or a solvent. The dichroic dye is driven by a guest-host system using the liquid crystal compound as the host to exhibit a color. The dichroic dye may be at least one selected from the group consisting of polyiodides, azo compounds, anthraquinone compounds, naphthoquinone compounds, azomethine compounds, tetrazine compounds, quinophthalone compounds, merocyanine compounds, perylene compounds, and dioxazine compounds. The dichroic dye is a compound or a combination of two or more compounds. If an improved light resistance and improved dichroic ratio are required, the dichroic dye may be at least one selected from the group consisting of azo compounds and anthraquinone compounds, and more preferably an azo compound. The weather resistance agent may be a photostabilizer.

The difference in refractive index Δn of the liquid crystal compound between the long and short axis directions (Δn = extraordinary refractive index ne - ordinary refractive index no) indicates the degree of intermolecular interaction in the liquid crystal compound. The refractive index difference Δn of the liquid crystal compound is the difference in the refractive index for visible light having a wavelength of 650 nm, and indicates the difference in the degree of scattering for visible light between when a voltage signal is applied and when it is not. If the liquid crystal compound is a combination of two or more kinds of liquid crystal compounds, the upper limit value of the refractive index difference Δn of the liquid crystal compound is the upper limit value obtained from the refractive index differences Δn of all the liquid crystal compounds. The lower limit value of the refractive index difference Δn of the liquid crystal compound is the lower limit value obtained from the refractive index differences Δn of all the liquid crystal compounds. If a larger difference in haze between the transparent state and the opaque state is required, it is preferable that the lower limit value of the refractive index difference Δn is high. If a larger difference in haze between the transparent state and the opaque state is required, the lower limit value of the refractive index difference Δn of the liquid crystal compound is preferably 0.005, more preferably 0.01.

### [Spacer]

The spacers are distributed throughout the transparent resin layer. Each spacer defines the thickness of the light control layer 12 around the spacer. The spacers make the thickness of the light control layer 12 uniform. The spacers may be bead spacers. The spacers may be photospacers obtained by exposure and development of a photoresist.

The spacers may be colorless and transparent, or colored and transparent. If the liquid crystal composition contains a dichroic dye, the color exhibited by the spacers is preferably the same as the color exhibited by the dichroic dye. If the color exhibited by the spacers is the same as the color exhibited by the dichroic dye, it is also possible to increase the color intensity exhibited by the light control sheet 11 in the opaque state.

The spacers may have a spherical shape or a cylindrical shape. The size of the spacers in the thickness direction of the light control layer 12 is changed as appropriate based on the thickness required for the light control layer 12. The size of the spacers in the thickness direction of the light control layer 12 may be 5 µm or more and 50 µm or less. If the spacers have a spherical shape, the average particle diameter of the spacers is, for example, 5 µm or more and 50 µm or less. The average particle diameter of the spacers can be obtained using a particle size analyzer that utilizes laser light scattering, changes in electrical resistance, image analysis after imaging, or another principle. The average particle diameter of the spacers is a number average particle diameter. If the spacers have a cylindrical shape, the average diameter of the spacers may be, for example, 5 µm or more and 50 µm or less. If power saving of the light control sheet 11 is required, the average particle diameter or average diameter of the spacers is preferably 5 µm or more and 30 µm or less in order to reduce the thickness of the light control layer 12.

The area occupancy rate of the spacers may be 0.9% or more and 30.0% or less. The area occupancy rate of the spacers is the ratio of the area occupied by the spacers to a unit area of the light control sheet 11. The area occupied by the spacers can be obtained by observing the light control sheet 11 in the transparent state from a viewpoint opposite to the first surface 11F. An example of the unit area of the light control sheet 11 is 1 mm × 1 mm. The area occupied by the spacers is calculated by observing a unit area of the light control sheet 11 in the transparent state using an optical microscope. The slight difference in refractive index between the spacers and the transparent resin layer makes regions corresponding to the spacers slightly whiter than the surrounding regions in an image captured by the optical microscope. The area occupied by the spacers is obtained by binarizing the image captured by the optical microscope and calculating the total area of granular regions that are slightly whiter than the surrounding regions. If the spacers have a spherical shape, the granular regions have a spherical shape. If the spacers have a cylindrical shape, the granular regions have a rectangular shape.

A constituent material of the spacers may be an insulating transparent inorganic compound, or an insulating transparent resin. The transparent inorganic compound may be any one selected from the group consisting of silicon dioxide and aluminum oxide. The transparent resin may be at least one selected from the group consisting of acrylic resin, epoxy resin, phenol resin, melamine resin, polyester, polycarbonate, polyolefin, polyvinyl chloride, polyvinylidene chloride, polystyrene, and acetyl cellulose. If the spacers are colored and transparent, the constituent material of the spacers may be a transparent resin in which a colored pigment is dispersed. If spacers are dispersed in a coating liquid for forming the light control layer 12, in other words, a liquid containing a curable compound and the liquid crystal composition, the surface of the spacers may be treated to be compatible with the coating liquid. If the light control sheet 11 is required to have an improved transmittance in the transparent state, the total light transmittance of the constituent material of the spacers is preferably 80% or more.

The refractive index of the constituent material of the spacers may be 1.4 or more and 1.6 or less. The refractive index of the constituent material of the spacers is different from the refractive index of the transparent resin forming the light control layer 12.

### [Configuration of Support Layers 15F and 15B]

The support layers 15F and 15B may both be a single layer structure. The constituent material of the support layers 15F and 15B may be a transparent resin or a transparent inorganic compound. The support layers 15F and 15B may contain particles therein. The constituent material of the particles may be a transparent resin or a transparent inorganic compound.

The support layers 15F and 15B may both be a multilayer structure. When the support layers 15F and 15B are multilayer structures, the support layers 15F and 15B each include a substrate and a foundation layer supported by the substrate. Each support layer is located between the substrate and the electrode layer 14F or 14B, and is in contact with the substrate and the electrode layer 14F or 14B.

The constituent material of the substrate may be a transparent resin or a transparent inorganic compound. The substrate may contain particles therein.

The constituent material of the foundation layer may be a transparent resin or a transparent inorganic compound. The foundation layer may contain particles therein. The constituent material of the particles may be a transparent resin or a transparent inorganic compound. If the particles are colored and transparent, the constituent material of the particles may be a transparent resin in which a colored pigment is dispersed. The refractive index of the transparent resin in the foundation layer may be 1.4 or more and 1.6 or less, and the refractive index of the particles in the foundation layer may be 1.4 or more and 1.6 or less. The refractive index of the constituent material of the particles is different from the refractive index of the transparent resin forming the foundation layer. If the light control sheet 11 is required to have an improved transmittance in the transparent state, the total light transmittance of the constituent material of the particles is preferably 80% or more.

The transparent resin may be at least one selected from the group consisting of polyester, polyacrylate, polycarbonate, polyolefin, polyvinyl chloride, polyvinylidene chloride, polystyrene, and acetyl cellulose. The polyester may be at least one selected from the group consisting of polyethylene terephthalate and polyethylene naphthalate. The polyacrylate may be at least one selected from the group consisting of polymethyl acrylate, polyethyl acrylate, polybutyl acrylate, and polyethylhexyl acrylate. The polyolefin may be at least one selected from the group consisting of polyethylene, polypropylene, polymethylpentene, ethylene-vinyl acetate copolymers, cycloolefin polymers, and cycloolefin copolymers.

The inorganic polymer compound may be at least one selected from the group consisting of silicon dioxide, silicon oxynitride, and silicon nitride.

The thickness of the support layers 15F and 15B is selected as appropriate so as to obtain the flexibility and transparency required for the light control sheet 11. The thickness of the support layers 15F and 15B is selected as appropriate so as to independently obtain the internal haze required for the transparent substrate layer. The first transparent substrate layer including the first support layer 15F, the first electrode layer 14F, and the first alignment layer 13F satisfies the following conditions 1 and 2. The second transparent substrate layer including the second support layer 15B, the second electrode layer 14B, and the second alignment layer 13B also satisfies the following conditions 1 and 2. Alternatively, the first and second transparent substrate layers satisfy the conditions 1 and 3.

(Condition 1) The external haze of each transparent substrate layer is less than 0.1%.
(Condition 2) The internal haze of each transparent substrate layer is 0.1% or more and 2.0% or less.
(Condition 3) The total internal haze of the two transparent substrate layers is 0.2% or more and 4.0% or less.

The external haze of the first transparent substrate layer originates from the roughness of the first surface 11F, which is one surface of the first support layer 15F. The external haze of the first transparent substrate layer also originates from the roughness of the surface of the first alignment layer 13F that contacts the first light control surface 12SF of the light control layer 12. If the transparent substrate layer does not include the first alignment layer 13F as in an example of the normal type, the external haze of the transparent substrate layer including the first support layer 15F originates from the roughness of one surface of the first electrode layer 14F that contacts the first light control surface 12SF of the light control layer 12.

The external haze of the first transparent substrate layer may be 0% or more and less than 0.1%. If it is required to reduce the visibility of the distribution of the spacers and suppress the unevenness of the electric field acting between the two transparent substrate layers, the external haze of the first transparent substrate layer is less than 1.6%, preferably 0% or more and 1.0% or less, and more preferably satisfies the condition 1.

The external haze of the second transparent substrate layer originates from the roughness of the second surface 11B, which is one surface of the second support layer 15B. The external haze of the second transparent substrate layer also originates from the roughness of the surface of the second alignment layer 13B that contacts the second light control surface 12SB of the light control layer 12. If the transparent substrate layer does not include the second alignment layer 13B as in an example of the normal type, the external haze of the transparent substrate layer including the second support layer 15B originates from the roughness of one surface of the second electrode layer 14B that contacts the second light control surface 12SB of the light control layer 12.

The external haze of the second transparent substrate layer may be 0% or more and less than 0.1%. If it is required to reduce the visibility of the distribution of the spacers and suppress the unevenness of the electric field acting between the two transparent substrate layers, the external haze of the second transparent substrate layer is less than 1.6%, preferably 0% or more and 1.0% or less, and more preferably satisfies the condition 1.

The internal haze of the first transparent substrate layer is the total internal haze of the layers that constitute the first transparent substrate layer. The internal haze of the second transparent substrate layer is the total internal haze of the layers that constitute the second transparent substrate layer. Examples of layers constituting the first transparent substrate layer are the alignment layer 13F, electrode layer 14F, and support layer 15F. Examples of layers constituting the second transparent substrate layer are the alignment layer 13B, electrode layer 14B, and support layer 15B.

If the haze of the light control sheet 11 in the transparent state is required to be stable, the internal haze of each transparent substrate layer may be 0.1% or more and 0.4% or less. If the haze of the light control sheet 11 in the transparent state is required to be stable, the total internal haze of the two transparent substrate layers may be 0.2% or more and 0.8% or less. If it is required to reduce the visibility of the spacers in the transparent state, the internal haze of each transparent substrate layer may be 0.4% or more and 2.0% or less. If it is required to reduce the visibility of the spacers in the transparent state, the total internal haze of the two transparent substrate layers may be 0.8% or more and 4.0% or less.

Internal haze originates from the difference in refractive index between internal elements of a layer, and the structural difference between the internal elements. The internal haze can be increased by increasing the amount of particles added into the layer. The internal haze can be reduced by reducing the amount of particles added into the layer. The internal haze can be increased by increasing the crystal density. The internal haze can be reduced by reducing the crystal density.

The electrode layers 14F and 14B each supply a voltage signal to the light control layer 12. If the electrical resistance values of the electrode layers 14F and 14B are suppressed, the formation of an in-plane voltage gradient in the electrode layers 14F and 14B can be suppressed, thereby achieving uniform in-plane visibility. Power saving of the light control device can be achieved by suppressing the electrical resistance values of the electrode layers 14F and 14B. On the other hand, adding particles to the electrode layers 14F and 14B and increasing the crystal density of the electrode layers 14F and 14B so as to satisfy the conditions 2 and 3 increases the electrical resistance values of the electrode layers 14F and 14B. To achieve uniform in-plane visibility, and to achieve power saving of the light control device, it is preferable that the internal haze of the electrode layers 14F and 14B is zero.

The alignment layers 13F and 13B each apply an orientation regulation force to the liquid crystal compound. Increasing the orientation regulation force in the alignment layers 13F and 13B increases the linear transmittance in the transparent state and increases the speed of transition from the opaque state to the transparent state. On the other hand, adding particles to the alignment layers 13F and 13B and increasing the crystal density of the alignment layers 13F and 13B so as to satisfy the conditions 2 and 3 reduces the orientation regulation force of the alignment layers 13F and 13B. To increase the linear transmittance in the transparent state, and to increase the responsiveness of the state transition, it is preferable that the internal haze of the alignment layers 13F and 13B is substantially zero.

For these reasons, it is preferable that the internal haze of each of the support layers 15F and 15B is 0.1% or more and 2.0% or less so that each transparent substrate layer satisfies the condition 2. In the case where each of the support layers 15F and 15B includes the substrate and the foundation layer, the internal haze of each substrate may be substantially zero, and the internal haze of each foundation layer may be 0.1% or more and 2.0% or less.

Alternatively, it is preferable that the total internal haze of the support layers 15F and 15B is 0.2% or more and 4.0% or less so that both transparent substrate layers satisfy the condition 3. In the case where each of the support layers 15F and 15B includes the substrate and the foundation layer, the internal haze of each substrate may be substantially zero, and the total internal haze of the foundation layers may be 0.2% or more and 4.0% or less.

The thickness of the foundation layer may be 1 µm or more and 10 µm or less, or 2 µm or more and 8 µm or less. If there are particles in the foundation layer to impart internal haze to the foundation layer, the foundation layer may include the particles and a foundation resin layer surrounding the particles.

The average particle diameter of the particles in the foundation layer may be 0.4 µm or more and 10 µm or less, or 0.8 µm or more and 5.0 µm or less. The average particle diameter of the particles is an arithmetic mean diameter and can be obtained by a method in accordance with JIS Z 8828:2019. If the average particle diameter of the particles in the foundation layer is 10 µm or less, a decrease in total light transmittance due to backward scattering can be suppressed in the opaque state because forward scattering caused by Mie scattering is likely to occur. If the average particle diameter of the particles in the foundation layer is 0.4 µm or more, the foundation layer is likely to have internal haze that satisfies the conditions 2 and 3.

The difference in refractive index between the foundation resin layer and the particles constituting the foundation layer may be 0.01 or more and 0.05 or less. If the difference in refractive index between the foundation resin layer and the particles is 0.01 or more, it is possible to prevent the thickness of the foundation layer required to satisfy the conditions 2 and 3 from becoming so large that the total light transmittance is significantly reduced. If the difference in refractive index between the foundation resin layer and the particles is 0.05 or less, it is possible to prevent the thickness of the foundation layer required to satisfy the conditions 2 and 3 from becoming so small that there is variation in thickness.

The light control sheet 11 may include another functional layer other than the layers described above. The other functional layer may be a gas barrier layer that suppresses the transmission of oxygen or moisture toward the light control layer 12, or an ultraviolet barrier layer that suppresses the transmission of ultraviolet light other than a specific wavelength toward the light control layer 12. The other functional layer may be a hard coat layer that mechanically protects the layers of the light control sheet 11, or an adhesive layer that enhances adhesion between layers in the light control sheet 11.

### [Method of Producing Light Control Sheet 11]

A method of producing the light control sheet 11 uses a coating liquid containing a photopolymerizable compound and a liquid crystal composition. The method of producing the light control sheet 11 includes forming a coating film from the coating liquid between the first and second transparent substrate layers. The first transparent substrate layer includes the first alignment layer 13F, first electrode layer 14F, and first support layer 15F. The second transparent substrate layer includes the second alignment layer 13B, second electrode layer 14B, and second support layer 15B. The coating film is formed so as to be in contact with the first and second alignment layers 13F and 13B.

Note that, in the method of producing a light control sheet 11 not including the first and second alignment layers 13F and 13B, the coating film is formed between the first and second electrode layers 14F and 14B. The coating film is formed so as to be in contact with the first and second electrode layers 14F and 14B.

The coating film contains a polymerization initiator for initiating polymerization of the photopolymerizable compound. The polymerization initiator may be at least one selected from the group consisting of diketone compounds, acetophenone compounds, benzoin compounds, benzophenone compounds, and thioxanthone compounds. The polymerization initiator may be a single compound or a combination of two or more compounds. The polymerization initiator may be any one selected from the group consisting of benzoin methyl ether, benzoin ethyl ether, benzoin isopropyl ether, and cyclohexyl phenyl ketone.

The method of producing the light control sheet 11 includes polymerizing the photopolymerizable compound in the coating film to cause phase separation of liquid crystal particles made of a liquid crystal composition from the polymer, thereby forming a transparent resin layer that defines voids and the liquid crystal composition that fills the voids. The light used to polymerize the photopolymerizable compound may be ultraviolet light or an electron beam. The light with which the coating film is irradiated may be emitted toward the first or second support layer 15F or 15B, or a combination of these may be applied.

Phase separation of the liquid crystal particles made of a liquid crystal composition progresses through polymerization of the photopolymerizable compound and diffusion of the liquid crystal composition. The rate at which the photopolymerizable compound polymerizes varies depending on the intensity of the light with which the photopolymerizable compound is irradiated. The speed at which the liquid crystal composition diffuses varies depending on the treatment temperature during polymerization of the photopolymerizable compound. The intensity of the light emitted to the photopolymerizable compound during phase separation of the liquid crystal composition is set so that the liquid crystal particles have a desired size, that is, the voids have a desired size.

If the polymerization rate of the photopolymerizable compound is high, phase separation occurs simultaneously at many sites in the coating film, which tends to reduce the size of the voids. If the polymerization rate of the photopolymerizable compound is low, phase separation occurs at a small number of sites in the coating film, which tends to increase the size of the voids. Heating may be performed to promote diffusion of the liquid crystal composition during the phase separation of the liquid crystal composition.

Note that, in the case where the support layers 15F and 15B both have the substrate and the foundation layer, the method of producing the light control sheet 11 includes forming a coating film for forming the foundation layer on the substrate prior to forming a coating film for forming the light control layer 12. The coating film for forming the foundation layer contains a photopolymerizable compound, a polymerization initiator, and particles. The photopolymerizable compound is preferably a hard coat agent. The hard coat agent may be at least one selected from the group consisting of acrylate compounds, methacrylate compounds, styrene compounds, thiol-ene compounds, and oligomers of these compounds. The particles may be at least one selected from the group consisting of acrylic particles, methacrylic particles, polystyrene particles, thiol-ene particles, silicon dioxide particles, and aluminum oxide particles.

The foundation layer coating liquid for forming the foundation layer is prepared by dispersing particles in a liquid containing a photosetting compound and a polymerization initiator. The surfaces of the particles in the foundation layer coating liquid may be treated to be compatible with the coating fluid.

### [Examples]

### [Transparent Substrate Layer of Example 1]

The foundation layer coating liquid for forming the foundation layer was applied to the substrate to obtain the support layers 15F and 15B. Then, the electrode layers 14F and 14B were formed on the support layers 15F and 15B, respectively, to obtain two transparent substrate layers of Example 1.

An AN100 glass plate for displays (manufactured by AGC) and having a thickness of 0.7 mm was used as the substrate. The substrate had a rectangular shape of 100 mm x 100 mm. A mixture prepared by mixing and stirring 1 part by weight of acrylic particles with 100 parts by weight of an acrylic hard coat agent was used as the foundation layer coating liquid. A DeSolite (registered trademark) Z7501 acrylic hard coat agent (manufactured by JSR Corporation) and having a refractive index of 1.49 after curing was used. MX500 acrylic particles (manufactured by Soken Chemical & Engineering Co., Ltd.) and having a refractive index of 1.50 and an average particle diameter of 5 µm were used. The coating film of the foundation layer coating liquid was dried and irradiated with ultraviolet light, thereby obtaining a hard coat layer with a thickness of 5 µm as the foundation layer of Example 1.

An indium tin oxide layer having a thickness of 50 nm was used as the electrode layers 14F and 14B. Using a sintered compact of indium oxide and tin oxide as the target, sputtering was performed using argon gas as the sputtering gas to form an indium tin oxide layer on the foundation layer. The indium tin oxide layer was then heated at 140°C, thereby obtaining a crystallized indium tin oxide layer as each of the electrode layers 14F and 14B of Example 1. The front surface of each of the electrode layers 14F and 14B opposite to the back surface in contact with the foundation layer was obtained as the contact surface of Example 1.

### [Light Control Sheet 11 of Example 1]

First, a spacer dispersion was applied to the contact surface of one of the transparent substrate layers of Example 1, thereby dispersing spacer bead spacers on the contact surface.

Divinylbenzene was used as a constituent material of the bead spacers. The bead spacers had an average particle diameter of 25 µm, and were dispersed in an alcohol-based solvent to obtain a spacer dispersion of Example 1. The spacer dispersion was applied to the four corners and center of the transparent substrate layer of Example 1 using a dropper, and dried at 100°C so that the area occupancy rate of the spacers would be 20.0%.

After applying a light control layer coating liquid to the contact surface after applying the spacers, the light control layer coating film was sandwiched between the two contact surfaces. Then, the coating film was cured by irradiating it with ultraviolet light to obtain the light control sheet of Example 1.

A polymer network type liquid crystal coating liquid knows as KN-F-001-01 (manufactured by Kyushu Nanotec Optics Co., Ltd.) was used as the light control layer coating liquid. Ultraviolet light was emitted using a high-pressure mercury lamp with wavelengths of 350 nm or less cut off, and the illuminance was set to 20 mW/cm² and the irradiation time was set to 30 seconds. In this way, a light control layer 12 was formed having a thickness of 25 µm and including the transparent resin layer that defines voids, the liquid crystal composition filling the voids, and the spacers.

### [Example 2]

The acrylic hard coat agent in Example 1 was changed to a vinyl-mixed hard coat agent having a refractive index of 1.47 after curing. The acrylic particles of Example 1 were changed to MX80H particles (manufactured by Soken Chemical & Engineering Co., Ltd.) and having a refractive index of 1.49 and an average particle diameter of 0.8 µm. Then, 100 parts by weight of the vinyl-mixed hard coat agent was mixed and stirred with 1 part by weight of the acrylic particles to obtain the foundation layer coating liquid. The transparent substrate layers and the light control sheet 11 of Example 2 were obtained in the same manner as in Example 1 except for these changes.

A mixture of polymethylmethacrylate (manufactured by Kuraray Co., Ltd.) and a vinyl chloride-vinyl acetate copolymer (SOLBIN C (registered trademark), manufactured by Nissin Chemical Industry Co., Ltd.) was used as the vinyl-mixed hard coat agent. Methyl ethyl ketone and toluene were used as a solvent for the vinyl-mixed hard coat agent. Polymethylmethacrylate: vinyl chloride-vinyl acetate copolymer: methyl ethyl ketone: toluene were mixed and stirred in a ratio of 6:4:5:5, thereby obtaining the vinyl-mixed hard coat agent of Example 2.

### [Example 3]

The acrylic hard coat agent of Example 1 was changed to DeSolite (registered trademark) Z7528 (manufactured by JSR Corporation) and having a refractive index of 1.50 after curing. The acrylic particles in Example 1 were changed to TECHPOLYMER (registered trademark) MX16LA particles (manufactured by Sekisui Kasei Co., Ltd.) and having a refractive index of 1.55 and an average particle diameter of 2.5 µm. Then, 100 parts by weight of the acrylic hard coat agent was mixed and stirred with 1 part by weight of the acrylic particles to obtain the foundation layer coating liquid. The transparent substrate layers and the light control sheet 11 of Example 3 were obtained in the same manner as in Example 1 except for these changes.

### [Comparative Example 1]

The transparent substrate layers and the light control sheet 11 of Example 2 were obtained by omitting the foundation layer from each transparent substrate layer of Example 1, and directly forming the electrode layer on one surface of the AN100 substrate (manufactured by AGC).

### [Comparative Example 2]

The acrylic hard coat agent in Example 1 was changed to a mixture of OPSTAR (registered trademark) TU4005 (manufactured by JSR Corporation) and KAYARAD DPHA (manufactured by Nippon Kayaku Co., Ltd.). DPHA is a mixture of dipentaerythritol pentaacrylate and dipentaerythritol hexaacrylate. 100 parts by weight of TU4005 and 5 parts by weight of DPHA were mixed and stirred to obtain the acrylic hard coat agent of Comparative Example 2. The refractive index of the cured product obtained using the acrylic hard coat agent of Comparative Example 2 is 1.60.

The acrylic particles of Example 1 were changed to MX80H particles (manufactured by Soken Chemical & Engineering Co., Ltd.) and having a refractive index of 1.49 and an average particle diameter of 0.8 µm. Then, 100 parts by weight of the acrylic hard coat agent was mixed and stirred with 5 parts by weight of the acrylic particles to obtain the foundation layer coating liquid. The transparent substrate layers and the light control sheet 11 of Comparative Example 2 were obtained in the same manner as in Example 1 except for these changes.

### [Comparative Example 3]

The acrylic hard coat agent in Example 1 was changed to a vinyl-mixed hard coat agent having a refractive index of 1.47 after curing. The acrylic particles of Example 1 were changed to MX500 particles (manufactured by Soken Chemical & Engineering Co., Ltd.) and having a refractive index of 1.50 and an average particle diameter of 5 µm. 100 parts by weight of the vinyl-mixed hard coat agent was mixed and stirred with 1 part by weight of the acrylic particles to obtain the foundation layer coating liquid. The thickness of the hard coat layer was changed to 4 µm. The transparent substrate layers and the light control sheet 11 of Comparative Example 3 were obtained in the same manner as in Example 1 except for these changes.

A mixture of polymethylmethacrylate (manufactured by Kuraray Co., Ltd.) and a vinyl chloride-vinyl acetate copolymer (SOLBIN C (registered trademark), manufactured by Nissin Chemical Industry Co., Ltd.) was used as the vinyl-mixed hard coat agent. Methyl ethyl ketone and toluene were used as a solvent for the vinyl-mixed hard coat agent. Polymethylmethacrylate: vinyl chloride-vinyl acetate copolymer: methyl ethyl ketone: toluene were mixed and stirred in a ratio of 6:4:5:5, thereby obtaining the vinyl-mixed hard coat agent of Comparative Example 3.

### [Evaluation of Transparent Substrate Layer]

The total haze of the transparent substrate layer was measured with an NDH 7000SP haze meter (manufactured by Nippon Denshoku Industries Co., Ltd.), and using a measurement method in accordance with JIS K 7136.

A VertScan R3300h Lite scanning white light interferometer (manufactured by Ryoka Systems Inc.) was used to measure the arithmetic mean roughness Sa of the contact surface of the transparent substrate layer within a rectangular measurement region of 1.408 mm x 1.885 mm.

An AN100 glass plate for displays was attached to the surface of each of the electrode layers 14F and 14B via an acrylic non-carrier adhesive tape. This suppresses the haze originating from the surface roughness of the electrode layers 14F and 14B, that is, external haze. An NDH 7000SP haze meter (manufactured by Nippon Denshoku Industries Co., Ltd.) and a method in accordance with JIS K 7136 were used to measure the haze of the transparent substrate layer after attaching the display glass plates as the internal haze of the transparent substrate layer.

### [Evaluation of Light Control Sheet 11]

The haze of the light control sheet 11 in the opaque state was measured with an NDH 7000SP haze meter (manufactured by Nippon Denshoku Industries Co., Ltd.), and using a measurement method in accordance with JIS K 7136. In addition, a voltage signal having a frequency of 60 Hz and a voltage of 40 V was supplied across the electrode layers 14F and 14B, and the haze of the light control sheet 11 in the transparent state was measured.

White light was emitted toward the light control sheet 11 from a three-wavelength fluorescent lamp located 0.5 m away from the light control sheet 11 in the direction normal to the light control sheet 11. An observation point was set on the opposite side of the light control sheet 11 from the three-wavelength fluorescent lamp, and at a distance of 0.5 m from the light control sheet 11 in the direction normal to the light control sheet 11. Then, the appearance of the light control sheet 11 was observed to determine whether non-uniform distribution of spacers is visually recognized.

### [Evaluation Results]

As shown in Fig. 2, Example 1 had a total haze of 0.1%. The internal haze of Example 1 was 0.1%, and the external haze originating from the surface of the transparent substrate layer of Example 1 was approximately 0% and less than 0.1%. The arithmetic mean roughness Sa of the contact surface in Example 1 was 15 nm. In Example 1, the haze of the light control sheet 11 in the opaque state was 98%, and the haze of the light control sheet 11 in the transparent state was 6%.

The total haze was 0.4% in Example 2. The internal haze of Example 2 was 0.4%, and the external haze originating from the surface of the transparent substrate layer of Example 2 was approximately 0% and less than 0.1%. The arithmetic mean roughness Sa of the contact surface in Example 2 was 11 nm. In Example 2, the haze of the light control sheet 11 in the opaque state was 98%, and the haze of the light control sheet 11 in the transparent state was 6%.

The total haze was 2.0% in Example 3. The internal haze of Example 3 was 2.0%, and the external haze originating from the surface of the transparent substrate layer of Example 3 was approximately 0% and less than 0.1%. The arithmetic mean roughness Sa of the contact surface in Example 3 was 13 nm. In Example 3, the haze of the light control sheet 11 in the opaque state was 98%, and the haze of the light control sheet 11 in the transparent state was 8%.

The total haze was 0.0% in Comparative Example 1. The internal haze of Comparative Example 1 was 0.0%, and the external haze originating from the surface of the transparent substrate layer of Comparative Example 1 was 0%. The arithmetic mean roughness Sa of the contact surface in Comparative Example 1 was 1 nm. In Comparative Example 1, the haze of the light control sheet 11 in the opaque state was 98%, and the haze of the light control sheet 11 in the transparent state was 6%. Distribution of the spacers was confirmed in the transmission observation of Comparative Example 1.

The total haze was 4.0% in Comparative Example 2. The internal haze of Comparative Example 2 was 4.0%, and the external haze originating from the surface of the transparent substrate layer of Comparative Example 2 was 0%. The arithmetic mean roughness Sa of the contact surface in Comparative Example 2 was 15 nm. In Comparative Example 2, the haze of the light control sheet 11 in the opaque state was 98%, and the haze of the light control sheet 11 in the transparent state was 11%. Distribution of the spacers was not confirmed in the transmission observation of Comparative Example 2.

The total haze was 2.0% in Comparative Example 3. The internal haze of Comparative Example 3 was 0.4%, and the external haze originating from the surface of the transparent substrate layer of Comparative Example 3 was 1.6%. The arithmetic mean roughness Sa of the contact surface in Comparative Example 3 was 25 nm. The haze of the light control sheet 11 of Comparative Example 3 was 97% in the opaque state. On the other hand, when a voltage signal was supplied to the light control sheet 11 as in Examples 1 to 3, the light control sheet 11 remained in the opaque state. That is, it could not be found that the light control sheet 11 changes to the transparent state.

It was found that Examples 1 to 3, and Comparative Examples 1 and 2 have external haze values that satisfy the above condition 1, and that at these levels, the supply of a voltage signal enables a reversible transition from the opaque state to the transparent state. On the other hand, it was found that Comparative Example 3 has a high external haze that does not satisfy the above condition 1, and that it is difficult for Comparative Example 3 to transition from the opaque state to the transparent state when a voltage signal is supplied.

It was found that Examples 1 to 3 have internal haze values that satisfy the above conditions 2 and 3, and at these levels, non-uniform distribution of the spacers is not visible in the transparent state. On the other hand, it was found that Comparative Example 2 has a low internal haze that does not satisfy the above conditions 2 and 3, and that non-uniform distribution of the spacers is visible in the transparent state in Comparative Example 2.

It was found that Examples 1 to 3 have internal haze values that satisfy the above conditions 2 and 3, and at these levels, the haze is 10% or less in the transparent state. On the other hand, it was found that Comparative Example 3 has a high internal haze that does not satisfy the above conditions 2 and 3, and that the haze is higher than 10% in the transparent state in Comparative Example 3.

According to the above-described embodiment, the advantageous effects listed below can be achieved.
(1) Since the external haze of both transparent substrate layers is less than 0.1%, if the electrode layers 14F and 14B are on the surfaces of the transparent substrate layers, it is possible to prevent the electric field acting between the two transparent substrate layers from becoming uneven. If the alignment layers 13F and 13B are on the surfaces of the transparent substrate layers, it is possible to prevent the orientation regulation force acting between the two transparent substrate layers from becoming uneven.
(2) Since the internal haze of each transparent substrate layer is 0.1% or more, or the total internal haze of the two transparent substrate layers is 0.2% or more, scattering occurring at the interface between the transparent resin layer and the spacers is overshadowed by the internal scattering of the transparent substrate layer.
(3) Since the internal haze of each transparent substrate layer is 2.0% or less, or the total internal haze of two transparent substrate layers is 4.0% or less, the transparency of the light control sheet 11 is not excessively impaired.
(4) It is difficult to obtain a completely uniform distribution of the spacers in the light control layer 12, and the spacers tend to be distributed unevenly to some extent. The internal scattering of the transparent substrate layer as described above in (2) and (3) particularly suitably suppresses non-uniform visibility resulting from uneven distribution of spacers.
(5) When the light control sheet 11 is attached to a transparent member, the external haze of the transparent substrate layer is reduced or varied by the adhesive layer that bonds the light control sheet to the transparent member. Similarly, when an ultraviolet blocking film, a shatterproof film, or the like is attached to the light control sheet 11, the external haze of the transparent substrate layer is reduced or varied by the adhesive layer that bonds the functional film to the light control sheet 11. In this regard, the internal haze of the transparent substrate layer is not reduced or less varied by the various adhesive layers. As a result, the internal scattering of the transparent substrate layer as described above in (2) and (3) suitably suppresses non-uniform visibility resulting from uneven distribution of spacers, especially in configurations in which it is attached to a transparent member, or a functional film is attached thereto.
(6) If the external haze of the electrode layers 14F and 14B supported by the support layers 15F and 15B is the external haze of the transparent substrate layers, it is possible to prevent the electric field acting between the two transparent substrate layers from becoming uneven.
(7) Since the internal haze of the transparent substrate layers is achieved by the particles present in the support layers 15F and 15B, the internal haze of the transparent substrate layers can be easily adjusted to be within a desired range.
(8) If the average particle diameter of the particles contained in the support layers 15F and 15B is 0.8 µm or more and 5.0 µm or less, the effect of suppressing such non-uniform visibility that the presence of the spacers is conspicuous, as described in (2) and (3) above, is improved.
(9) If the difference in refractive index between the particles and the foundation resin layer surrounding the particles is 0.01 or more and 0.05 or less, the internal haze of the support layers 15F and 15B can be easily controlled to 0.1% or more and 2.0% or less.
(10) If the arithmetic mean roughness Sa of the contact surface of the transparent substrate layer is 20 nm or less, the arithmetic mean roughness Sa of the contact surface in contact with the light control layer 12 is 20 nm or less. This reduces the unevenness in the electric field caused by variation in the thickness or shape of the light control layer 12.
(11) If the haze of the light control sheet 11 in the transparent state is 6% or more and 10% or less, the transparency of the light control sheet 11 can be easily ensured while suppressing non-uniform visibility that makes the spacers conspicuous, with the internal haze of the transparent substrate layer.

The above embodiment may be modified and implemented as follows.
- The two transparent substrate layers may have different internal haze values. In this case, it the two transparent substrate layers satisfy the conditions 1 and 3, the internal haze of one transparent substrate layer may be substantially zero.
- The internal haze of one transparent substrate layer may be 0.1% or more and 2.0% or less as a total internal haze of two or more layers.
- The first transparent substrate layer may include a layer having the largest internal haze within the first transparent substrate layer on the first surface 11F side with respect to the first electrode layer 14F. In this case, the largest internal haze may be 0.1% or more and 2.0% or less, and the internal haze values of layers other than the layer having the largest internal haze may be substantially zero.
- The second transparent substrate layer may include a layer having the largest internal haze within the second transparent substrate layer on the second surface 11B side with respect to the second electrode layer 14B. In this case, the largest internal haze may be 0.1% or more and 2.0% or less, and the internal haze values of layers other than the layer having the largest internal haze may be substantially zero.
- The first support layer 15F may include a first surface layer. The first surface layer may have the first surface 11F as one surface. In this case, the internal haze of the first surface layer may be 0.1% or more and 2.0% or less, and the internal haze of each of the layers in the first transparent substrate layer other than the first surface layer may be substantially zero.
- The second support layer 15B may include a second surface layer. The second surface layer may have the second surface 11B as one surface. In this case, the internal haze of the second surface layer may be 0.1% or more and 2.0% or less, and the internal haze of each of the layers in the second transparent substrate layer other than the second surface layer may be substantially zero.

### [Reference Signs List]

- P1: First connection terminal
- P2: Second connection terminal
- 11: Light control sheet
- 12: Light control layer
- 13F: First alignment layer
- 13B: Second alignment layer
- 14F: First electrode layer
- 14B: Second electrode layer
- 15F: First support layer
- 15B: Second support layer
- 51: Driver

## Claims

1. A light control sheet comprising:
two transparent substrate layers each including an electrode layer; and
a light control layer located between the two transparent substrate layers, wherein
the light control layer includes a transparent resin layer defining voids, a liquid crystal composition filling the voids, and spacers that determine a thickness of the light control layer,
**characterised in that**:
each transparent substrate layer has external haze of less than 0.1%, and
each transparent substrate layer has internal haze of 0.1% or more and 2.0% or less.

2. A light control sheet comprising:
two transparent substrate layers each including an electrode layer; and
a light control layer located between the two transparent substrate layers, wherein
the light control layer includes a transparent resin layer defining voids, a liquid crystal composition filling the voids, and spacers that determine a thickness of the light control layer,
**characterised in that**:
each transparent substrate layer has external haze of less than 0.1%, and
the two transparent substrate layers have total internal haze of 0.2% or more and 4.0% or less.

3. The light control sheet according to claim 1 or 2, wherein each transparent substrate layer includes a support layer that supports the electrode layer,
the external haze of each transparent substrate layer is external haze of the electrode layer supported by the transparent substrate layer, and
internal haze of each support layer is 0.1% or more and 2.0% or less.

4. The light control sheet according to claim 3, wherein each support layer contains particles therein.

5. The light control sheet according to claim 4, wherein an average particle diameter of the particles is 0.8 µm or more and 5.0 µm or less.

6. The light control sheet according to claim 3, wherein each support layer includes a foundation layer that is a foundation for the electrode layer and a substrate that supports the foundation layer, and
each foundation layer contains particles therein.

7. The light control sheet according to claim 4, wherein a difference in refractive index between the particles and a foundation resin layer surrounding the particles is 0.01 or more and 0.05 or less.

8. The light control sheet according to claim 1 or 2, wherein each transparent substrate layer has a contact surface that contacts the light control layer, and
the contact surface has an arithmetic mean roughness Sa of 20 nm or less.

9. The light control sheet according to claim 1 or 2, wherein the light control sheet has a haze of 6% or more and 10% or less in a transparent state.

10. A method of producing a light control sheet, including:
coating a coating liquid for forming a light control layer between two transparent substrate layers each including an electrode layer, the light control layer including a transparent resin layer defining voids, spacers embedded in the transparent resin layer, and a liquid crystal composition filling the voids; and
forming the light control layer by curing the coating liquid,
**characterised in that**:
each transparent substrate layer in the light control sheet has external haze of less than 0.1%, and each transparent substrate layer has internal haze of 0.1% or more and 2.0% or less.

11. A method of producing a light control sheet, including:
coating a coating liquid for forming a light control layer between two transparent substrate layers each including an electrode layer, the light control layer including a transparent resin layer defining voids, spacers embedded in the transparent resin layer, and a liquid crystal composition filling the voids; and
forming the light control layer by curing the coating liquid,
**characterised in that**:
each transparent substrate layer in the light control sheet has external haze of less than 0.1%, and the two transparent substrate layer have total internal haze of 0.2% or more and 4.0% or less.

12. The method of producing a light control sheet according to claim 10 or 11, wherein forming the transparent layers include laminating an electrode layer on a support layer so that external haze of each transparent substrate layer is external haze of the electrode layer supported by the transparent substrate layer, and
internal haze of the support layer is 0.1% or more and 2.0% or less.

13. The method of producing a light control sheet according to claim 12, further including forming the support layer by laminating, on a substrate, a foundation layer for laminating the electrode layer, wherein
the foundation layer contains particles therein.

## Patentansprüche

1. Lichtsteuerungsfolie, mit:
zwei transparenten Substratschichten, die jeweils eine Elektrodenschicht enthalten; und
einer Lichtsteuerungsschicht, die zwischen den beiden transparenten Substratschichten angeordnet ist, wobei
die Lichtsteuerungsschicht eine transparente Harzschicht, die Hohlräume definiert, eine die Hohlräume füllende Flüssigkristallzusammensetzung und Abstandshalter, die die Dicke der Lichtsteuerungsschicht bestimmen, umfasst,
**dadurch gekennzeichnet, dass**
jede transparente Substratschicht eine äußere Trübung von weniger als 0,1 % aufweist und
jede transparente Substratschicht eine innere Trübung von 0,1 % oder mehr und 2,0 % oder weniger aufweist.

2. Lichtsteuerungsfolie, mit:
zwei transparenten Substratschichten, die jeweils eine Elektrodenschicht umfassen; und
eine Lichtsteuerungsschicht, die zwischen den beiden transparenten Substratschichten angeordnet ist, wobei
die Lichtsteuerungsschicht eine transparente Harzschicht, die Hohlräume definiert, eine die Hohlräume füllende Flüssigkristallzusammensetzung und Abstandshalter, die die Dicke der Lichtsteuerungsschicht bestimmen, umfasst,
**dadurch gekennzeichnet, dass**
jede transparente Substratschicht eine äußere Trübung von weniger als 0,1 % aufweist, und
die beiden transparenten Substratschichten eine gesamte innere Trübung von 0,2 % oder mehr und 4,0 % oder weniger aufweisen.

3. Lichtsteuerungsfolie nach Anspruch 1 oder 2, wobei jede transparente Substratschicht eine Trägerschicht umfasst, die die Elektrodenschicht trägt,
die äußere Trübung jeder transparenten Substratschicht die äußere Trübung der von der transparenten Substratschicht getragenen Elektrodenschicht ist, und
die innere Trübung jeder Trägerschicht 0,1 % oder mehr und 2,0 % oder weniger beträgt.

4. Lichtsteuerungsfolie nach Anspruch 3, wobei jede Trägerschicht Partikel enthält.

5. Lichtsteuerungsfolie nach Anspruch 4, wobei ein durchschnittlicher Partikeldurchmesser der Partikel 0,8 µm oder mehr und 5,0 µm oder weniger beträgt.

6. Lichtsteuerungsfolie nach Anspruch 3, wobei jede Trägerschicht eine Grundschicht, die als Untergrund für die Elektrodenschicht dient, und ein Substrat, das die Grundschicht trägt, umfasst, und
jede Grundschicht Partikel enthält.

7. Lichtsteuerungsfolie nach Anspruch 4, wobei eine Differenz des Brechungsindexes zwischen den Partikeln und einer die Partikel umgebenden Grundharzschicht 0,01 oder mehr und 0,05 oder weniger beträgt.

8. Lichtsteuerungsfolie nach Anspruch 1 oder 2, wobei jede transparente Substratschicht eine Kontaktfläche aufweist, die mit der Lichtsteuerungsschicht in Kontakt steht, und
die Kontaktfläche eine arithmetische Mittelaufrauheit Sa von 20 nm oder weniger aufweist.

9. Lichtsteuerungsfolie nach Anspruch 1 oder 2, wobei die Lichtsteuerungsfolie in einem transparenten Zustand eine Trübung von 6 % oder mehr und 10 % oder weniger aufweist.

10. Verfahren zur Herstellung einer Lichtsteuerungsfolie, mit den folgenden Schritten:
Auftragen einer Beschichtungsflüssigkeit zur Bildung einer Lichtsteuerungsschicht zwischen zwei transparenten Substratschichten, die jeweils eine Elektrodenschicht umfassen, wobei die Lichtsteuerungsschicht eine transparente Harzschicht, die Hohlräume definiert, in die transparente Harzschicht eingebettete Abstandshalter und eine die Hohlräume füllende Flüssigkristallzusammensetzung umfasst; und
Ausbilden der Lichtsteuerungsschicht durch Aushärten der Beschichtungsflüssigkeit,
**dadurch gekennzeichnet, dass**
jede transparente Substratschicht in der Lichtsteuerungsfolie eine äußere Trübung von weniger als 0,1 % aufweist und jede transparente Substratschicht eine innere Trübung von 0,1 % oder mehr und 2,0 % oder weniger aufweist.

11. Verfahren zur Herstellung einer Lichtsteuerungsfolie, mit folgenden Schritten:
Auftragen einer Beschichtungsflüssigkeit zur Bildung einer Lichtsteuerungsschicht zwischen zwei transparenten Substratschichten, die jeweils eine Elektrodenschicht umfassen, wobei die Lichtsteuerungsschicht eine transparente Harzschicht, die Hohlräume definiert, in die transparente Harzschicht eingebettete Abstandshalter und eine die Hohlräume füllende Flüssigkristallzusammensetzung umfasst; und
Bilden der Lichtsteuerungsschicht durch Aushärten der Beschichtungsflüssigkeit,
**dadurch gekennzeichnet, dass**
jede transparente Substratschicht in der Lichtsteuerungsfolie eine äußere Trübung von weniger als 0,1 % aufweist und die beiden transparenten Substratschichten eine gesamte innere Trübung von 0,2 % oder mehr und 4,0 % oder weniger aufweisen.

12. Verfahren zur Herstellung einer Lichtsteuerungsfolie nach Anspruch 10 oder 11, wobei das Bilden der transparenten Schichten das Laminieren einer Elektrodenschicht auf eine Trägerschicht umfasst, so dass die äußere Trübung jeder transparenten Substratschicht der äußeren Trübung der von der transparenten Substratschicht getragenen Elektrodenschicht entspricht und
die innere Trübung der Trägerschicht 0,1 % oder mehr und 2,0 % oder weniger beträgt.

13. Verfahren zur Herstellung einer Lichtsteuerungsfolie nach Anspruch 12, das ferner das Bilden der Trägerschicht durch Laminieren einer Grundschicht zum Aufbringen der Elektrodenschicht auf ein Substrat umfasst, wobei
die Grundschicht Partikel enthält.

## Revendications

1. Feuille de contrôle de la lumière comprenant :
deux couches de substrat transparentes comportant chacune une couche d'électrode ; et
une couche de contrôle de la lumière située entre les deux couches de substrat transparentes, dans laquelle
la couche de contrôle de la lumière comporte une couche de résine transparente définissant des vides, une composition de cristaux liquides remplissant les vides, et des entretoises qui déterminent une épaisseur de la couche de contrôle de la lumière,
**caractérisée en ce que**
chaque couche de substrat transparente présente un trouble externe inférieur à 0,1 %, et
chaque couche de substrat transparent présente un trouble interne de 0,1 % ou plus et 2,0 % ou moins.

2. Feuille de contrôle de la lumière comprenant :
deux couches de substrat transparentes comportant chacune une couche d'électrode ; et
une couche de contrôle de la lumière située entre les deux couches de substrat transparentes, dans laquelle
la couche de contrôle de la lumière comporte une couche de résine transparente définissant des vides, une composition de cristaux liquides remplissant les vides, et des entretoises qui déterminent une épaisseur de la couche de contrôle de la lumière,
**caractérisée en ce que**
chaque couche de substrat transparent présente un trouble externe inférieur à 0,1 %, et
les deux couches de substrat transparentes présentent un trouble interne total de 0,2 % ou plus et 4,0 % ou moins.

3. Feuille de contrôle de la lumière selon la revendication 1 ou 2, dans laquelle chaque couche de substrat transparente comporte une couche de support qui supporte la couche d'électrode,
le trouble externe de chaque couche de substrat transparente correspond au trouble externe de la couche d'électrode supportée par la couche de substrat transparente, et
le trouble interne de chaque couche de support est de 0,1 % ou plus et de 2,0 % ou moins.

4. Feuille de contrôle de la lumière selon la revendication 3, dans laquelle chaque couche de support contient des particules.

5. Feuille de contrôle de la lumière selon la revendication 4, dans laquelle le diamètre moyen des particules est 0,8 µm ou plus et 5,0 µm ou moins.

6. Feuille de contrôle de la lumière selon la revendication 3, dans laquelle chaque couche de support comporte une couche de fondation qui sert de fondation à la couche d'électrode et un substrat qui supporte la couche de fondation, et
chaque couche de fondation contient des particules.

7. Feuille de contrôle de la lumière selon la revendication 4, dans laquelle une différence d'indice de réfraction entre les particules et une couche de résine de fondation entourant les particules est 0,01 ou plus et 0,05 ou moins.

8. Feuille de contrôle de la lumière selon la revendication 1 ou 2, dans laquelle chaque couche de substrat transparente présente une surface de contact qui est en contact avec la couche de contrôle de la lumière, et
la surface de contact présente une rugosité moyenne arithmétique Sa de 20 nm ou moins.

9. Feuille de contrôle de la lumière selon la revendication 1 ou 2, dans laquelle la feuille de contrôle de la lumière présente un trouble de 6 % ou plus et de 10 % ou moins dans un état transparent.

10. Procédé de fabrication d'une feuille de contrôle de la lumière, comportant :
le revêtement d'un liquide de revêtement pour former une couche de contrôle de la lumière entre deux couches de substrat transparentes comportant chacune une couche d'électrode, la couche de contrôle de la lumière comportant une couche de résine transparente définissant des vides, des entretoises noyées dans la couche de résine transparente, et une composition de cristaux liquides remplissant les vides ; et
la formation de la couche de contrôle de la lumière par durcissement du liquide de revêtement,
**caractérisé en ce que**
chaque couche de substrat transparente de la feuille de contrôle de la lumière présente un trouble externe inférieur à 0,1 %, et chaque couche de substrat transparente présente un trouble interne de 0,1 % ou plus et 2,0 % ou moins.

11. Procédé de fabrication d'une feuille de contrôle de la lumière, comportant :
l'application d'un liquide de revêtement pour former une couche de contrôle de la lumière entre deux couches de substrat transparentes comportant chacune une couche d'électrode, la couche de contrôle de la lumière comportant une couche de résine transparente définissant des vides, des entretoises noyées dans la couche de résine transparente, et une composition de cristaux liquides remplissant les vides ; et
la formation de la couche de contrôle de la lumière par durcissement du liquide de revêtement,
**caractérisé en ce que**
chaque couche de substrat transparente de la feuille de contrôle de la lumière présente un trouble externe inférieur à 0,1 %, et les deux couches de substrat transparentes présentent un trouble interne total de 0,2 % ou plus et 4,0 % ou moins.

12. Procédé de fabrication d'une feuille de contrôle de la lumière selon la revendication 10 ou 11, dans lequel la formation des couches transparentes comporte le laminage d'une couche d'électrode sur une couche de support de telle sorte que le trouble externe de chaque couche de substrat transparent corresponde au trouble externe de la couche d'électrode supportée par la couche de substrat transparente, et
le trouble interne de la couche de support soit 0,1 % ou plus et 2,0 % ou moins.

13. Procédé de fabrication d'une feuille de contrôle de la lumière selon la revendication 12, comportant en outre la formation de la couche de support par laminage, sur un substrat, d'une couche de fondation pour laminer la couche d'électrode, dans lequel
la couche de fondation contient des particules.
